# FASCICULE DE BREVET EUROPEEN

(11) **EP 1 354 625 B1**
(45) Date de publication et mention de la délivrance du brevet: **02.09.2009**
(21) Numéro de dépôt: 03290732.1
(22) Date de dépôt: 21.03.2003
(51) Int. Cl.: B01J 20/34, B01D 41/02, B01J 20/14

(54) **Procédé pour régénérer un substrat minéral de filtration**
Verfahren zur Regenerierung eines mineralischen Filtrationssubstrats
Method for regenerating a mineral filtration substrate

(30) Priorité: 28.03.2002 FR 0203910
(43) Date de publication de la demande: 22.10.2003
(73) Titulaire: GDF SUEZ, 75008 Paris (FR)
(72) Inventeur: Marchand, Bernard, 75018 Paris (FR)
(74) Mandataire: Vesin, Jacques

(56) Documents cités:
- EP-A- 0 529 555
- DD-A- 288 317
- DE-A- 2 519 669
- DE-A- 19 536 992
- DE-A- 19 911 520
- FR-A- 2 784 602
- US-A- 4 622 008
- US-A- 5 102 538

## Description

L'invention concerne un procédé pour régénérer un substrat minéral de filtration.

Un tel substrat est notamment utilisé pour la filtration de liquides dans des industries, chimiques, pharmaceutiques, vinicole, ou analogue. Le substrat minéral est alors généralement ajouté à un fluide à filtrer. Lors de la filtration du fluide, lesdites particules se déposent sur un support pour former un filtre sur lequel sont retenus les éléments à filtrer.

Les dépôts sur le support dus à l'opération de filtration, communément appelés gâteau de filtration, sont retirés, en vue de leur traitement.

La réglementation, voire l'interdiction, de la mise en centre de stockage ou l'épandage sur les terres agricoles des gâteaux de filtration ont conduit à développer des filières destinées à les éliminer ou à les traiter.

DE-A-199 11 520 décrit un procédé de régénération de Kieselguhr comprenant les caractéristiques suivantes :
- on utilise un four à lit fluidisé comprenant des particules inertes présentant une densité et/ou une granulométrie supérieure(s) à celles du substrat à régénérer,
- on injecte de l'air sous pression dans le lit fluidisé, afin d'effectuer un brassage des particules inertes dudit lit fluidisé,
- on introduit le substrat à régénérer dans le four afin de brûler les particules organiques,
- on filtre les fumées issues du lit fluidisé, afin de récupérer les particules du substrat de filtration.

La densité et/ou la granulométrie des particules du lit fluidisé étant supérieure à celle(s) des particules du substrat à régénérer, seule une faible proportion de ces particules risque de s'échapper avec les fumées. L'injection d'air sous pression permet d'obtenir par brassage du gâteau de filtration et des particules inertes du lit fluidisé, une fragmentation du gâteau de filtration. En outre, cette injection favorise l'oxydation du substrat à régénérer.

Le document US-4 622 008 décrit un appareil de régénération d'un substrat minéral de filtration déjà séché, comprenant un four à lit fluidisé, un dispositif d'injection de gaz de combustion pour le brassage des particules du lit fluidisé, et un filtre des fumées récupérant les particules du substrat qui est introduit sous forme d'un flux descendant, à une température supérieure à 650 °C. Il ne décrit pas l'injection d'air sous pression, ni l'injection de gaz combustible.

L'invention vise à améliorer les performances de régénération des procédés de traitement existants, en particulier celui décrit dans DE-A-19911520, sans augmenter notablement leur coût.

Pour ce faire, conformément à l'invention, l'objet revendiqué doit contenir toutes les caractéristiques techniques telles que défini dans le libellé de la revendication indépendante 1. D'autres caractéristiques optionelles sont décrites dans les revendications dependantes.

Ainsi, on améliore le brassage avec les particules inertes du lit fluidisé et donc la fragmentation du substrat à régénérer, on réduit le risque que les particules du substrat à régénérer ne flottent sur la surface du lit fluidisé de particules inertes, on améliore encore l'oxydation des particules à régénérer en évitant que celles-ci ne s'échappent trop rapidement avec les fumées et on obtient une combustion plus complète des particules.

Avantageusement, on introduit le substrat à régénérer dans le lit fluidisé en périphérie dudit lit fluidisé et sous la surface supérieure dudit lit fluidisé.

En pratique, le flux de particules inertes le long des parois du four est globalement descendant, de sorte qu'il n'est pas nécessaire de prévoir des moyens complexes pour créer un flux globalement descendant de particules inertes. Une optimisation de la répartition du flux d'air injecté permet toutefois d'accroître cet effet.

De plus, le risque que les particules du substrat à régénérer ne flottent sur la surface du lit fluidisé est encore réduit et l'oxydation des particules à régénérer est encore améliorée en introduisant le substrat à régénérer sous la surface supérieure dudit lit fluidisé.

De préférence, on introduit le substrat à régénérer dans le lit fluidisé aux trois quarts de la hauteur du lit fluidisé, à 10% près. Les effets précités sont particulièrement notables lorsque le substrat à régénérer n'est pas introduit très près de la surface du lit fluidisé. Mais, au-delà d'une certaine distance par rapport à la surface supérieure du lit fluidisé, on ne constate plus de gain notable, tandis que la pression à exercer pour introduire le substrat à régénérer dans le four croit de manière conséquente.

Selon une autre caractéristique avantageuse, on injecte du gaz combustible dans le lit fluidisé. Ceci permet d'apporter l'énergie nécessaire pour vaporiser l'eau contenue dans le gâteau de filtration, de chauffer les particules du substrat minéral jusqu'à la température du lit et de maintenir une température suffisante pour brûler les matières organiques contenues dans le gâteau de filtration à l'endroit où elle est le plus utile.

Le four comprend alors un brûleur disposé au-dessus du lit fluidisé pour démarrer le procédé et le sécuriser en évitant la présence de gaz combustible imbrûlé.

Le procédé se révèle particulièrement adapté à la régénération de substrat minéral comprenant des particules, notamment de perlite, de diatomite ou de kieselguhr, ayant une granulométrie comprise entre 10 microns et 500 microns.

Il est alors avantageux d'utiliser essentiellement du sable d'une granulométrie comprise entre 1 et 4 millimètres pour constituer les particules inertes du lit fluidisé.

Afin d'obtenir une combustion complète des éléments organiques contenus dans le substrat de filtration à régénérer, la température dans la partie supérieure 4a du four, située au-dessus du lit fluidisé est supérieure à 850°C. Avantageusement, on assure une teneur en oxygène d'au moins 6% hors eau des fumées issues du lit fluidisé.

Selon une autre caractéristique avantageuse, on utilise des moyens d'introduction du substrat à régénérer que l'on isole thermiquement du four. On évite ainsi un début de cuisson du substrat de filtration conduisant à une agglomération des particules le constituant.

Selon encore une autre caractéristique avantageuse de l'invention, on réalise une filtration des particules du substrat de filtration en deux étapes successives, de sorte que l'on récupère les particules du substrat de filtration triées en fonction de leur granulométrie.

Ainsi, il est possible d'utiliser un premier filtre permettant de récupérer les particules du substrat de filtration présentant une granulométrie suffisante pour être réutilisées et un deuxième filtre permettant de récupérer séparément les particules du substrat de filtration de moindre granulométrie.

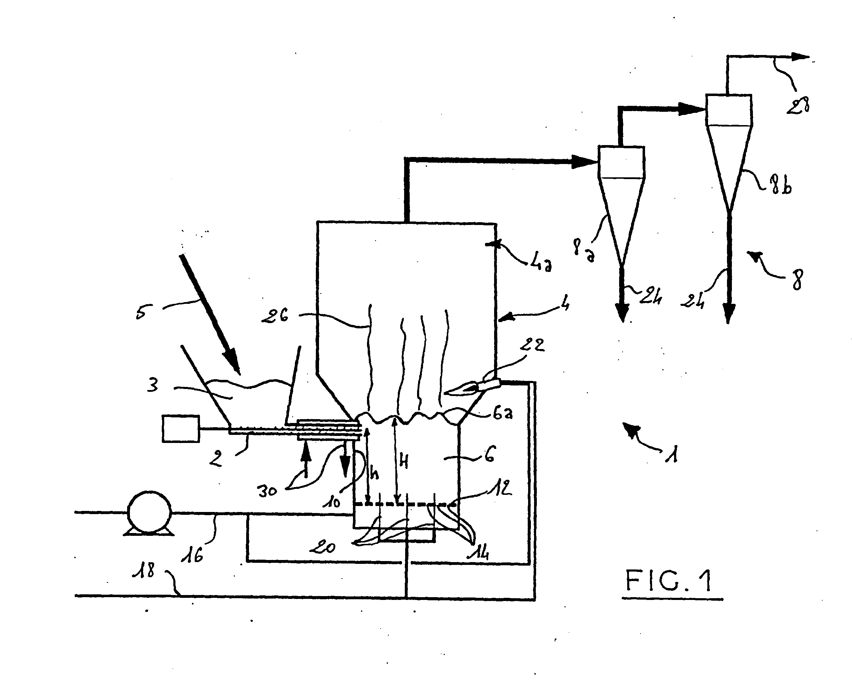

L'invention va apparaître encore plus clairement dans la description qui va suivre, faite en référence au dessin annexé repéré figure 1 et représentant schématiquement une installation 1 pour mettre en oeuvre un procédé conforme à l'invention.

Tel qu'illustré, l'installation 1 comprend essentiellement des moyens d'amenée 2 destinés à convoyer un gâteau de filtration 3, un four 4 à lit fluidisé 6 destiné à régénérer un substrat de filtration contenu dans le gâteau de filtration et des moyens de filtration 8 communiquant avec la partie supérieure 4a du four 4, destinés à récupérer les particules régénérées 24 du substrat de filtration s'échappant de la surface supérieure 6a du lit fluidisé au sein des cendres ou gaz de combustion 26.

Le lit fluidisé est constitué de particules minérales inertes, ici du sable 6. Ce lit fluidisé 6 présente une surface inférieure reposant en partie inférieure 4a du four sur une plaque support 12 percée de trous dans lesquels sont disposées des buses 14 reliées à une source d'air sous pression 16 pour injecter de l'air sous pression dans le sable 6.

L'installation comprend en outre des moyens d'injection de gaz combustible 20 dans le lit fluidisé 6 en partie inférieure 4b du four 4, à travers la plaque 12, ainsi qu'un brûleur à gaz 22 disposé dans le four 4 au-dessus de la surface supérieure 6a du lit fluidisé 6. Les moyens d'injection de gaz combustible 20 et le brûleur à gaz 22 sont connectés à une source de gaz combustible sous pression 18.

Tel qu'illustré par la flèche 5, le gâteau de filtration humide 3 comprenant le substrat minéral de filtration constitué des particules à régénérer chargées de déchets essentiellement organiques est placé dans un réservoir d'où il est convoyé vers le four 4 par les moyens d'amenée 2.

Le gâteau de filtration est introduit légèrement sous la surface supérieure 6a du lit fluidisé 6, à proximité d'une paroi 10 du four. Il existe à cet endroit un mouvement convectif descendant du sable qui assure que le gâteau de filtration, bien que de densité plus faible que la densité apparente du sable, pénètre convenablement à l'intérieur du lit où il est intimement mélangé avec le sable 6.

Ce mouvement convectif peut être adapté en modifiant l'orientation et la répartition des buses d'injection 14, ainsi que leur débit. L'injection d'air sous pression dans le lit fluidisé 6 crée des mouvements de convection au sein du lit fluidisé élevant la surface supérieure 6a du lit fluidisé, de sorte que la densité du sable constituant le lit fluidisé apparaît plus faible qu'elle ne le serait en l'absence d'injection d'air. C'est pourquoi on parle alors de densité apparente.

Au contact du sable chaud, l'eau contenue dans le gâteau de filtration s'évapore. Puis, la température des particules à régénérer s'élève et les matières organiques sont progressivement oxydées sous forme de dioxyde de carbone (CO₂) et de vapeur d'eau (H₂O). Sous l'action des mouvements convectifs du sable, le gâteau de filtration se délite. Les particules du substrat de filtration initialement agglomérées par les matières organiques se dispersent, puis s'échappent par la surface supérieure 6a du lit fluidisé avec les fumées 26.

Les particules du substrat de filtration sont alors entraînées dans les fumées jusqu'en haut du four. Les moyens de filtration 8 destinés à extraire les particules régénérées 24 des fumées 26 comprend au moins un étage, ici deux étages successifs 8a et 8b, de séparation gaz/solide, tels que des cyclones ou des filtres haute température de caractéristiques différentes permettant de récupérer les particules du substrat de filtration triées en fonction de leur granulométrie. Les particules régénérées 24 du substrat de filtration sont récupérées à la base de chaque étage de séparation, puis refroidies.

La présence de plusieurs étages de filtration permet de trier les particules en fonction de leur granulométrie, en vue de leur réutilisation.

Les produits de combustion 28 sortant des moyens de filtration peuvent ensuite passer à travers un système de séparation de poussières tel qu'un filtre à manche ou un électro-filtre, afin de récupérer les particules les plus fines. Un système de réduction des émissions de dioxyde de souffre (SO₂) par injection de chaux ou de carbonate de calcium peut également être prévu en amont du système de séparation des poussières. De même, on peut prévoir de réduire les émissions d'oxyde d'azote au moyen d'un système catalytique avec injection d'urée ou d'ammoniaque.

Afin de réduire les coûts de fonctionnement de l'installation, on peut également faire passer les produits de combustion 28 dans un échangeur, dans lequel circule l'air 16 destiné à être injecté sous pression dans le lit fluidisé 6.

Les moyens d'amenée 2 représentés sont constitués par un système à vis associé à un système de gavage. Toutefois, on pourrait prévoir d'utiliser une pompe à piston ou analogue.

L'extrémité des moyens d'amenée en contact avec le lit fluidisé 6 est refroidie par circulation d'air ou d'eau ou des moyens analogues permettant d'isoler thermiquement les moyens d'amenée 2 du lit fluidisé 6 à haute température.

La surface supérieure 6a du lit fluidisé 6 est située à une distance H de la plaque 12 correspondant à la hauteur apparente du lit fluidisé. L'introduction du gâteau de filtration dans le lit fluidisé s'effectue à une distance h de la plaque 12, inférieure à la hauteur H. La surface supérieure 6a du lit fluidisé étant sensiblement à la pression atmosphérique, compte tenu des pertes de charges dans le lit, la pression statique à la hauteur h correspondant à l'injection du gâteau de filtration dans le lit fluidisé est supérieure à la pression atmosphérique. Pour éviter des remontées de gaz chaud à travers les moyens d'amenée 2, on peut prévoir de maintenir une contre-pression dans les moyens d'amenée soit par injection d'air sous pression, soit en utilisant des moyens d'amenée étanches soit en mettant sous pression le gâteau de filtration sous l'effet de la hauteur dans le réservoir.

Par ailleurs, avant d'amener le gâteau de filtration dans les moyens d'amenée 2, on peut le traiter, afin de récupérer des éléments valorisables, tels que des sels. Ce traitement peut notamment consister en un lavage avec des solutions acides.

Les essais réalisés ont essentiellement portés sur la régénération de perlite, de diatomite ou de kieselguhr ayant une densité proche de 100 Kg/m³ et une granulométrie comprise entre 10 microns et 500 microns. Le lit fluidisé était constitué de sable dont la densité est supérieure à 1500 Kg/m³ et la granulométrie essentiellement comprise entre 1 et 4 millimètres.

La température du lit fluidisé 6 est avantageusement comprise entre 650°C et 850°C, tandis que la température dans le four au-dessus du lit fluidisé est maintenue au-dessus de 850°C du fait de l'injection de gaz combustible 20.

Bien entendu, l'invention n'est nullement limitée à la réalisation qui vient d'être décrite à titre d'exemple non limitatif. Ainsi, on pourrait prévoir de remplacer le sable par des particules d'alumine ou d'autres particules inertes.

## Revendications

1. Procédé pour régénérer un substrat minéral de filtration pollué par des particules organiques, comprenant les caractéristiques suivantes :
- on part d'un gâteau de filtration -humide comprenant le substrat minéral de filtration constitué des particules à régénérer, notamment de perlite, diatomite ou de kieselguhr, ayant une granulométrie comprise entre 10 µ et 500µ, chargées de déchets essentiellement organigues, le gâteau de filtration contenant de l'eau à vaporiser,
- on utilise un four (4) à lit fluidisé (6) comprenant des particules inertes présentant une densité et/ou une granulométrie supérieure(s) à celles du substrat à régénérer,
- on injecte (14) de l'air sous pression (16) dans le lit fluidisé, afin d'effectuer un brassage des particules inertes dudit lit fluidisé,
- on injecte (20) du gaz combustible (18) dans le lit fluidisé afin d'obtenir une température comprise entre 650°C et 850°C dans le lit fluidisé, la température dans le four au-dessus du lit fluidisé est maintenue au-dessus de 850°C du fait de l'injection de gaz combustible-.
- on introduit le substrat à régénérer dans une zone du four présentant un flux de particules inertes globalement descendant afin de brûler les particules organiques, et
- on filtre (8) les fumées (26) issues du lit fluidisé, afin de récupérer les particules du substrat de filtration,
le procédé comprend en outre le fonctionnement d'un brûleur (22) disposé au-dessus du lit fluidisé, pour démarrer le procédé et le sécuriser en évitant la présence de gaz combustible imbrulé.

2. Procédé selon l'une des revendications 1 et 2, **caractérisé en ce que** l'on introduit le substrat à régénérer dans le lit fluidisé en périphérie dudit lit fluidisé et sous la surface supérieure (6a) dudit lit fluidisé.

3. Procédé selon la revendication 3, **caractérisé en ce que** l'on introduit le substrat à régénérer dans le lit fluidisé aux trois quarts de la hauteur du lit fluidisé, à 10% près

4. Procédé selon l'une quelconque des revendications précédentes, **caractérisé en ce que** l'introduction (2) du substrat à régénérer est effectuée avec des moyens (2) que l'on isole thermiquement du four.

5. Procédé selon l'une quelconque des revendications précédentes, **caractérisé en ce que** la granulométrie des particules inertes du lit fluidisé est comprise entre 5 et 50 fois la granulométrie des particules du substrat de filtration à régénérer.

6. Procédé selon l'une quelconque des revendications précédentes, **caractérisé en ce que** le substrat minéral comprend des particules, notamment de perlite, de diatomite ou de kieselguhr, ayant une granulométrie comprise entre 10 microns et 100 microns.

7. Procédé selon la revendication 7, **caractérisé en ce que** les particules inertes sont essentiellement composées de sable d'une granulométrie comprise entre 1 et 4 millimètres.

8. Procédé selon l'une quelconque des revendications précédentes, **caractérisé en ce que** l'on assure une teneur en oxygène d'au moins 6% hors eau des fumées issues du lit fluidisé.

9. Procédé selon l'une quelconque des revendications précédentes, **caractérisé en ce que** l'on réalise une filtration des particules du substrat de filtration en deux étapes successives, de sorte que l'on récupère les particules du substrat de filtration triées en fonction de leur granulométrie.

## Claims

1. A method for regenerating a mineral filtration substrate polluted by organic particles, including the following characteristics:
- the method is based on a wet filter cake including the mineral filtration substrate made up from particles to be regenerated, in particular from perlite, diatomite or kieselguhr with a particle size of between 10µ and 500µ, loaded with essentially organic waste, the filter cake containing water to be vaporised.
- a furnace (4) with fluidised bed (6) is used, including inert particles with a density and/or particle size higher than that of the substrate to be regenerated,
- compressed air (16) is injected (14) into the fluidised bed in order to mix the inert particles of said fluidised bed,
- combustible flue gas (18) is injected (20) into the fluidised bed in order to obtain a temperature of between 650°C and 850°C in the fluidised bed, the temperature in the furnace above the fluidised bed is kept over 850°C because of the injection of combustible flue gas.
- the substrate to be regenerated is introduced into a furnace zone with an overall downwards flow of inert particles, in order to burn the organic particles, and
- smoke (26) coming from the fluidised bed is filtered (8) in order to recover the filtration substrate particles,
- in addition, the method includes the operation of a burner (22) positioned above the fluidised bed in order to start the method and secure it by avoiding the presence of unburnt combustible flue gas.

2. A method according to claim 1, **characterised in that** the substrate to be regenerated is introduced into the fluidised bed at the edge of said fluidised bed and below the upper surface (6a) of said fluidised bed.

3. A method according to claim 2, **characterised in that** the substrate to be regenerated is introduced into the fluidised bed at a level corresponding to three quarters of the height of the fluidised bed to the nearest 10%.

4. A method according to any one of the previous claims, **characterised in that** the introduction (2) of the substrate to be regenerated is performed with means (2) which are thermally isolated from the furnace.

5. A method according to any one of the previous claims, **characterised in that** the size of the inert particles of the fluidised bed is between 5 and 50 times the size of the particles of the filtration substrate to be regenerated.

6. A method according to any one of the previous claims, **characterised in that** the mineral substrate includes particles, in particular perlite, diatomite or kieselguhr particles with a particle size of between 10 and 100 microns.

7. A method according to claim 6, **characterised in that** the inert particles are essentially made up from sand with a particle size of between 1 and 4 millimetres.

8. A method according to any one of the previous claims, **characterised in that** an oxygen content of at least 6% is ensured, excluding the water in the smoke coming from the fluidised bed.

9. A method according to any one of the previous claims, **characterised in that** filtration of the particles of the filtration substrate is performed in two successive stages, in such a way as the particles of the filtration substrate are recovered, sorted according to their particle size.

## Patentansprüche

1. Verfahren zum Regenerieren eines mineralischen Filtersubstrats, das durch organische Partikel verschmutzt ist, mit folgenden Eigenschaften:
- man geht von einem feuchten Filterkuchen aus, der das mineralische Filtersubstrat enthält, das aus Partikeln besteht, die es zu regenerieren gilt, vor allem aus Perlit, Diatomit oder Kieselgur, mit einer Korngrößenverteilung zwischen 10µm und 500µm, die mit hauptsächlich organischen Abfällen belastet sind, wobei der Filterkuchen zu verdampfendes Wasser enthält.
- man verwendet einen Ofen (4) mit Wirbelbett (6) und inerten Partikeln, die eine Dichte und/ oder Korngrößenverteilung aufweisen, die über jenen des zu regenerierenden Substrats liegen,
- man injiziert (14) Druckluft (16) ins Wirbelbett, um ein Aufrühren der inerten Partikel des besagten Wirbelbetts zu erreichen,
- man injiziert (20) Brenngas (18) ins Wirbelbett, um im Wirbelbett eine Temperatur zwischen 650°C und 850°C zu erreichen, wobei die Temperatur im Ofen oberhalb des Wirbelbetts durch die Injektion des Brenngases über 850°C gehalten wird.
- man führt das zu regenerierende Substrat in einen Bereich des Ofens ein, der einen Fluss an inerten Partikeln aufweist, der allgemein nach unten führt, um die organischen Partikel zu verbrennen, und
- man filtert (8) den Rauch (26) aus dem Wirbelbett, um die Partikel aus dem Filtersubstrat zu gewinnen,
das Verfahren beinhaltet darüber hinaus den Betrieb eines Brenners (22), der oberhalb des Wirbelbetts angebracht ist, zum Starten des Verfahrens und zum Sichern des Verfahrens, indem nicht verbranntes Brenngas vermieden wird.

2. Verfahren nach Anspruch 1, **dadurch gekennzeichnet, dass** man das zu regenerierende Substrat in ein Wirbelbett an der Peripherie des besagten Wirbelbetts und unter der oberen Fläche (6a) des besagten Wirbelbetts einführt.

3. Verfahren nach Anspruch 2, **dadurch gekennzeichnet, dass** man das zu regenerierende Substrat zu drei Viertel der Höhe des Wirbelbetts ins Wirbelbett einführt, und das mit 10%-iger Genauigkeit,

4. Verfahren nach irgendeinem der vorherigen Ansprüche, **dadurch gekennzeichnet, dass** die Einführung (2) des zu regenerierenden Substrats mit Mitteln (2) erfolgt, die man thermisch vom Ofen isoliert.

5. Verfahren nach irgendeinem der vorherigen Ansprüche, **dadurch gekennzeichnet, dass** die Korngrößenverteilung der inerten Partikel des Wirbelbetts zwischen 5 und 50 Mal der Korngrößenverteilung der Partikel des zu regenerierenden Filtersubstrats entspricht.

6. Verfahren nach irgendeinem der vorherigen Ansprüche, **dadurch gekennzeichnet, dass** das mineralische Substrat Partikel, wie vor allem Perlit, Diatomit oder Kieselgur enthält, die eine Korngrößenverteilung zwischen 10µm und 100µm aufweisen.

7. Verfahren nach Anspruch 6, **dadurch gekennzeichnet, dass** die inerten Partikel vor allem aus Sand mit einer Korngrößenverteilung zwischen einem und vier Millimetern besteht.

8. Verfahren nach irgendeinem der vorherigen Ansprüche, **dadurch gekennzeichnet, dass** man einen Sauerstoffgehalt von mindestens 6%, ohne das Wasser des Rauchs aus dem Wirbelbett zu berücksichtigen, gewährleistet.

9. Verfahren nach irgendeinem der vorherigen Ansprüche, **dadurch gekennzeichnet, dass** man eine Filterung der Partikel des Filtersubstrats in zwei aufeinander folgenden Schritten durchführt, sodass man die Partikel des Filtersubstrats nach ihrer Korngrößenverteilung geordnet erhält.
